# FASCICULE DE BREVET EUROPEEN

(11) **EP 0 823 065 B1**
(45) Date de publication et mention de la délivrance du brevet: **21.11.2001**
(21) Numéro de dépôt: 96908318.7
(22) Date de dépôt: 22.04.1996
(51) Int. Cl.: G02C 5/22

(54) **CHARNIERE ELASTIQUE POUR LUNETTES**
FEDERSCHARNIER FUER BRILLEN
RESILIENT HINGE FOR SPECTACLES

(30) Priorité: 28.04.1995 FR 9505370
(43) Date de publication de la demande: 11.02.1998
(73) Titulaire: CHEVASSUS S.A., F-39400 Morez (FR)
(72) Inventeur: JAFFELIN, Etienne, F-39220 Les Rousses (FR)
(74) Mandataire: Moinas, Michel
(86) Numéro de dépôt international: IB9600361
(87) Numéro de publication internationale: WO9634309

(56) Documents cités:
- DE-A- 3 837 180
- DE-U- 9 005 081
- DE-U- 9 013 407
- FR-A- 2 116 242
- FR-A- 2 703 477
- US-A- 3 923 384

## Description

La présente invention concerne une charnière élastique pour monture de lunettes reliant une branche à une façade, cette charnière autorisant un déplacement complémentaire élastique de la branche vers l'extérieur au-delà de sa position "ouverte", ci-après désignée par "position d'ouverture normale". De telles charnières apportent dans le port de lunettes un élément de confort très apprécié des utilisateurs, notamment parce que les branches se plaquent contre les tempes sans pression excessive.

D'une manière générale, une charnière élastique est composée d'une part d'un charnon de face fixé solidairement dans un tenon latéral de la façade, lequel tenon peut être droit, débordant, roulé ou coudé, et d'autre part un chamon de branche relié par un mécanisme de rappel élastique relié à la branche ou interne à celle-ci, un axe assurant la liaison entre les chamons. Dans ces charnières élastiques, il y a donc deux chamons, l'un mâle, l'autre femelle, l'un étant fixé sur le tenon latéral et l'autre sur la branche. Ces charnières sont connues comme étant du type à bille, télescopique ou à lame (coulisse/capot).

Des exemples de charnières élastiques sont donnés plus particulièrement dans EP 0 426 947, FR 2 466 790, FR 1 511 263, EP 0 262 099, EP 0 340 161, FR 2 609 816, EP 0 191 944 et EP 0 308 533. Le mécanisme de rappel est généralement réalisé au moyen d'un ressort et ce mécanisme de rappel travaille en compression.

Ce type de charnière donne habituellement satisfaction, mais présente l'inconvénient majeur d'être composé de très petites et nombreuses pièces relevant de la micro-mécanique, ce qui entraîne un coût de fabrication élevé. En outre, le montage de l'organe de rappel et de sa butée est compliqué et délicat.

Il existe également des charnières élastiques dont le mécanisme de rappel est à cylindre, telles que celle décrite dans EP 0 607 114, mais leur fabrication nécessite des opérations d'usinage compliquées, entraînant là aussi des coûts élevés.

D'autres charnières ont été décrites, celles décrites par exemple dans FR 1 009 345 (brevet très ancien remontant à 1948) et DE 4 241 660. Dans FR 1 009 345, la charnière élastique comprend une branche qui, par la forme qui lui est conférée, vient prendre appui contre l'axe de pivotement de la branche vers la façade en créant une force de rappel élastique dirigée vers l'intérieur. Une telle charnière ne saurait résister longtemps à un usage, même normal. Dans DE 4 241 660, le rappel est provoqué par un prolongement de la branche qui vient prendre appui sur ce même axe de pivotement et, par effet de levier crée une force dirigée vers l'intérieur. Par nature, l'élément faisant levier, est nécessairement situé sur l'extérieur, ce qui nuit considérablement à l'esthétique de la monture, outre le fait que le prolongement fait saillie, ce qui peut constituer une gêne, voire un danger, pour l'utilisateur.

Enfin, et ce n'est pas là l'un des moindres inconvénients, la structure même de la charnière et du mécanisme de rappel, ainsi que les contraintes de montage, ne permettent pas de réaliser une charnière élastique dont, en position ouverte, la continuité tenon/branche est assurée sans écart, protubérance ou trou, ce qui entraîne les mêmes désavantages.

Si on veut placer l'élément faisant levier sur l'intérieur, cela entraîne des complications importantes et multiplie le nombre de pièces, comme cela est décrit par exemple dans FR 1 196 398. Cette fois, dans certaines positions, l'élément faisant levier fait saillie vers l'intérieur. Il est donc mal protégé et peut être accidentellement déformé ou arraché.

Mentionnons pour mémoire la charnière décrite dans FR 2 626 682, mais qui n'est pas une charnière élastique, ainsi que la charnière décrite dans WO 94/11774 qui, au contraire, peut être largement ouverte au-delà de sa position d'ouverture normale. Elle s'apparente aux charnières du type à levier évoquées précédemment et en présente donc les mêmes inconvénients.

Mentionnons enfin le document FR 2 703 477 décrivant une charnière dans laquelle la branche est reliée à la face par l'intermédiaire d'un organe de rappel qui comprend deux portées cylindriques en prise autour de l'axe de rotation de la charnière. Cet organe de rappel comprend en supplément une lame travaillant en flexion pour assure le rappel élastique de la branche.

Avec cette construction, la branche est en butée contre la faxe lorsqu'elle occupe une position d'ouverture maximale. Autrement dit, l'organe de rappel sollicité en flexion a tendance à ramener la branche dans une position où elle n'est pas en butée contre la face. Cette position, qui correspond en fait à la position d'ouverture normale, laisse donc apparaître un espace, une discontinuité entre la branche et la face.

L'invention vise précisément à remédier à tous ces défauts en proposant une charniére élastique présentant la simplicité des charnières décrites dans les trois documents cités ci-dessus tout en n'en présentant pas les inconvénients. Cette charnière est spécifiée dans la revendication 1.

Dans une première forme d'exécution, c'est le point d'appui de l'organe de rappel autour du charnon qui est flottant et forme rampe, et que les deux positions extrêmes sont déterminées par la forme en boucle conférée à l'extrémité de l'organe de rappel autour de l'axe du charnon. L'extrémité de l'organe de rappel a avantageusement la forme d'une boucle fermée ou ouverte lovée autour de l'axe du chamon, la largeur de l'ouverture étant inférieure au diamètre de l'axe du chamon.

Dans une deuxième forme d'exécution, c'est l'axe du chamon qui est flottant et que les deux positions extrêmes sont définies par une lumière ménagée dans le chamon. Alors, la lumière est avantageusement inclinée par rapport à l'axe du tenon d'un angle compris entre 0 et 60°, de préférence 45°.

De préférence, le chamon de la charnière élastique a une forme faisant came sur laquelle la branche prend appui à l'ouverture et à la fermeture, ce qui définit en coopération avec l'organe de rappel deux positions de repos stables, respectivement la position ouverte normale et la position fermée où la branche est rabattue contre la face de la monture.

L'organe de rappel peut être réalisé en n'importe quel matériau ayant la tenue mécanique nécessaire, par exemple en métal, acier, aluminium, titane, etc.

L'organe de rappel peut être constitué d'une lame. Il peut être constitué aussi d'une tige, mieux d'une double tige ouverte ou fermée ayant par exemple, en vue de dessus, une forme de diapason, dont les branches peuvent être parallèles ou non, dans le même plan ou dans des plans différents.

L'organe de rappel peut présenter, vu de côté, une forme droite, arquée, cambrée ou cintrée, à profil curviligne, par exemple circulaire ou elliptique ; il peut également présenter une forme coudée, par exemple à plusieurs coudes, c'est-à-dire à profil polygonal.

On aura évidemment compris que, contrairement aux charnières élastiques traditionnelles, la branche de la charnière selon l'invention n'est pas fixée directement sur le charnon.

L'invention sera mieux comprise en référence aux dessins annexés, donnés à titre d'exemple non limitatif. Il doit être bien compris que les diverses variantes illustrées dans les figures peuvent être combinées entre elles. Dans ces dessins, où des chiffres de référence identiques désignent des pièces identiques ou similaires :
- les figures 1, 2 et 3 sont des vues de côté d'une charnière élastique selon l'invention, dans une première forme d'exécution, illustrant respectivement la position où la branche est fermée, ouverte normalement et ouverte au-delà de sa position normale,
- la figure 4 est une vue de détail de dessus de l'organe de rappel de la charnière des figures 1 à 3,
- les figures 5, 6 et 7 sont des vues de côté d'une charnière élastique selon l'invention, dans une autre forme d'exécution, illustrant respectivement la position où la branche est fermée, ouverte normalement, et ouverte au-delà de sa position normale,
- les figures 8 et 9 sont des vues de côté d'une charnière analogue à celle des figures 5 à 7, illustrant respectivement la position où la branche est ouverte normalement et ouverte au-delà de sa position normale,
- la figure 10 est une vue de dessus de la branche et de son organe de rappel de la charnière illustrée aux figures 8 et 9, et
- les figures 11 à 13 correspondent à une variante de la charnière de la figure 1 à 3.

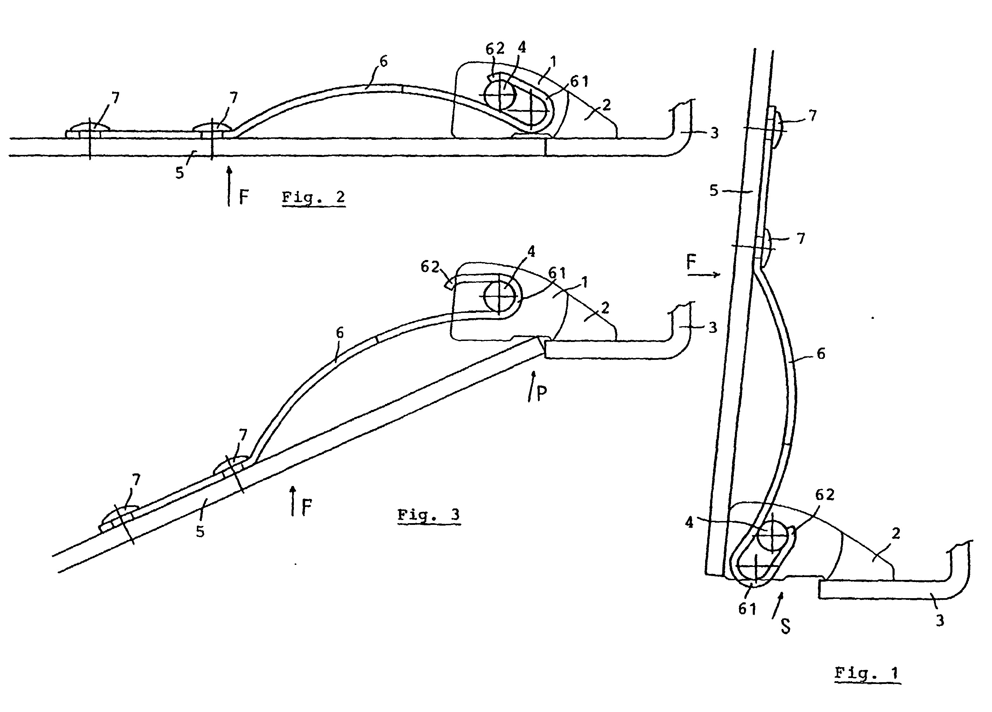

Comme on le voit sur les figures 1, 2 et 3, respectivement 11, 12, 13, qui sont trois vues de côté de deux premières variantes de la charnière selon l'invention et qui illustrent le principe de fonctionnement, un charnon 1 de monture est fixé par l'intermédiaire d'une pièce de raccordement 2 faisant enjoliveur sur un tenon 3 de façade coudé, cette façade, non représentée, étant dans un plan perpendiculaire au tenon 3. Le charnon 1 comprend un axe 4. La branche 5, par ailleurs libre par rapport au tenon 3, est rendue solidaire du chamon 1 par l'intermédiaire d'un organe de rappel 6 qui vient prendre appui sur l'axe 4 et est fixé sur la branche par deux vis 7. L'organe 6 de rappel peut tourner librement autour de l'axe 4. A la différence des. charnières décrites dans les documents cités plus haut, et ceci est fondamental, l'organe de rappel 6 sert aussi d'organe de maintien de la branche 5 et de liaison de celle-ci avec le chamon 1.

En position fermée, l'organe de rappel 6, qui a une forme cintrée, est suffisamment rigide pour assurer un maintien suffisant entre le tenon 3 et la branche 5. L'organe de rappel 6 vient se recourber autour de l'axe 4 dans une boucle 61 qui se referme légèrement à l'extrémité 62 (figures 1, 2 et 3). Dans cette position, on constatera que l'organe 6 prend appui sur l'axe 4 au niveau de son extrémité 62. Bien entendu, l'ouverture à l'extrémité 62 est inférieure au diamètre de l'axe 4.

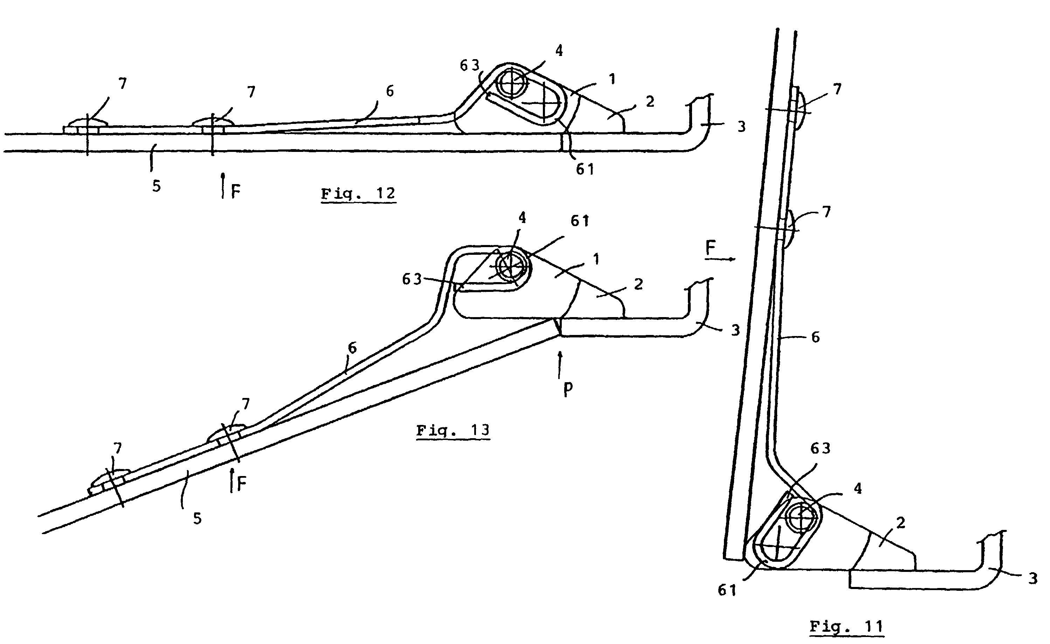

Dans le mode de réalisation des figures 11, 12 et 13, l'organe 6, qui est sensiblement rectiligne, se termine par une boucle 61, qui en tournant dans l'autre sens, se referme entièrement à l'extrémité 63. On évite ainsi tout "crochet" qui pourrait se révéler agressif.

Quand on ouvre la charnière, en passant de la position illustrée à la figure 1 à la position illustrée à la figure 2, la branche 5 pivote autour de l'axe 4 en glissant sur la surface d'appui S du charnon, qui ici a une forme en carré arrondie, de façon à forcer la branche 5, soit dans la position fermée de la figure 1, soit dans la position ouverte normale de la figure 2. On aura en effet compris que, dans une position intermédiaire, la surface d'appui S n'étant pas ronde, la branche 5 s'éloigne de l'axe 4, ce qui sollicite l'organe de rappel 6 en flexion au niveau du point F, c'est-à-dire au point de raccordement de l'organe 6 sur la branche 5, au niveau d'une des vis 7, où de cintré qu'il était, l'organe 6 est devenu droit. Au point F où il a fléchi, l'organe de rappel 6 agit comme une lame de ressort.

Cette sollicitation en flexion tend à renvoyer la branche 5 dans sa position initiale fermée si l'ouverture est inférieure à 45 degrés, ou à l'envoyer dans sa position ouverte normale, comme représenté à la figure 2, si on a dépassé une ouverture à 45 degrés. Un chamon ayant la forme d'une came crée donc un effet bistable.

Il faut bien comprendre cependant ici que le charnon 4 peut avoir une surface d'appui S parfaitement circulaire, auquel cas la branche 5 n'a pas de position préférentielle ouverte ou fermée et peut donc rester en stabilité sous n'importe quel angle d'ouverture.

On remarquera que, dans la position d'ouverture normale illustrée à la figure 2, l'organe de rappel a repris une position sensiblement identique à celle de la position fermée de la figure 1 et que, surtout, il prend toujours appui sur l'axe 4 au niveau de son extrémité 62, respectivement 63.

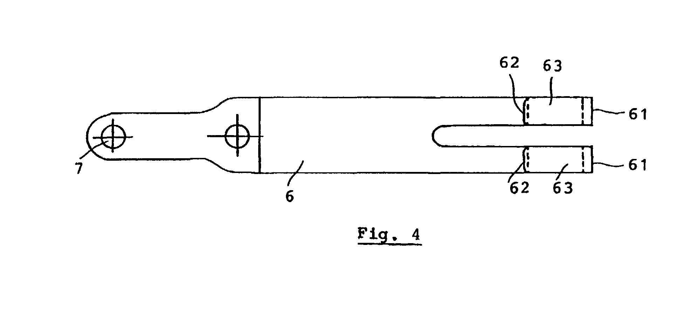

Lorsqu'on dépasse la position d'ouverture normale représentée à la figure 2, pour se retrouver en position d'ouverture complémentaire représentée à la figure 3, la branche 5, qui en position ouverte est en butée contre le tenon 3. prend appui contre celui-ci pour pivoter autour d'un point P, ce qui écarte l'organe de rappel 6 par rapport à la branche 5 et sollicite donc et à nouveau celui-ci en flexion au point F, créant une force de rappel importante qui tend à ramener la branche 5 de la position de la figure 3 dans sa position d'ouverture normale de la figure 2.

La forme de l'organe de rappel 6, ici en forme d'arc, ainsi que sa longueur et son épaisseur, peuvent être choisies pour créer une force de rappel suffisante, mais pas trop importante, de façon à ce qu'une très faible sollicitation suffise pour passer contre la surface d'appui S du chamon 1 de la position de la figure 1 (fermée) à la position de la figure 2 (ouverte).

Mais en revanche, une déformation importante au niveau du point F peut générer, si désiré, une force de rappel importante de façon à ce que, si besoin est, l'ouverture complémentaire de la figure 3 nécessite une action plus vigoureuse.

Les caractéristiques de l'organe de rappel 6, choisies pour définir un rapport des forces à exercer comme indiqué plus haut, peuvent être aussi bien choisies pour obtenir un rapport des forces égal, ou encore inversé par rapport à ce qui est décrit plus haut.

Comme on le voit sur la figure 3, non seulement l'organe de rappel 6 a fléchi au niveau du point F, mais il a glissé contre l'axe 4, jusqu'à ce que cet axe 4 vienne en butée dans la boucle 61 constituant l'extrémité de l'organe 6.

C'est donc une combinaison de glissement faisant office d'axe flottant et de flexion au point F qui permet l'ouverture au-delà de la position normale de rappel élastique.

Il est important de noter ici que l'organe 6 a une double fonction, celle d'agir en rappel lors de l'ouverture normale de la branche (figure 1 vers figure 2) et celle d'agir en rappel lors du dépassement de l'ouverture normale (figure 2 vers figure 3), et ceci par le même mécanisme de flexion.

Le fonctionnement de la charnière des figures 11 à 13 est analogue au fonctionnement de la charnière des figures 1 à 3.

L'organe de rappel est représenté de dessus à la figure 4, se terminant en deux fourches 63 constituées chacune d'une boucle 61 et d'une extrémité 62 légèrement refermée. De la sorte, ces extrémités peuvent venir se clipser autour de l'axe 4, par exemple sur deux tétons prolongeant cet axe ou directement sur celui-ci, et les extrémités refermées 62 empêchent l'axe 4 de sortir de l'organe de rappel 6. Les tétons peuvent être remplacés par une goupille clipsable.

A l'inverse, la lame coudée ou cintrée peut se terminer en une fourche centrale se clipsant sur l'axe, les deux tétons le prolongeant servant à l'ancrage du chamon femelle. Dans un cas, le charnon est mâle, dans l'autre femelle.

Pour des raisons d'ordre essentiellement technique liées à la facilité de clipsage distincte de la fonction rappel, les deux fourches de clipsage 63 de l'organe 6 peuvent être droites (variante représentée) ou de plus en plus étroites en direction des tétons, sur tout ou partie de leur longueur d'enroulement.

Quant à l'axe 4, il peut être intégré au chamon, ou rapporté, par exemple sous forme de goupille, de cheville de rivet ou de vis.

En variante non représentée, la lame, au lieu d'être une lame arquée, peut être une lame coudée en plusieurs endroits.

L'organe de rappel peut également être réalisé sous forme d'une ou plusieurs tiges comme on le verra aux figures suivantes, mais il faut bien comprendre qu'un organe de rappel sous forme de tige peut également être utilisé dans la forme d'exécution des figures 1 à 3, respectivement 11 à 13.

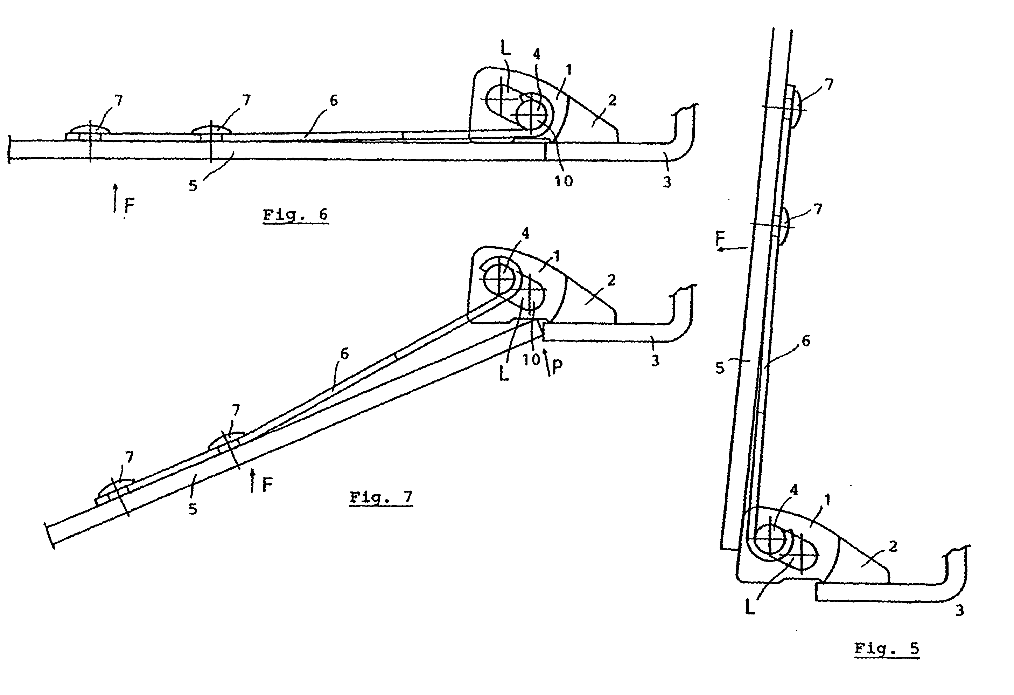

Dans les figures 5 à 10, qui correspondent à une autre forme d'exécution à tige, on remarquera que l'organe de rappel 6, ici sensiblement droit, est fixé normalement à l'axe 4, et que cet axe est susceptible de se déplacer dans une lumière 10 ménagée à l'intérieur du charnon 1, selon un angle orienté sensiblement de 30 degrés par rapport à la branche 5 dans sa position ouverte.

Les organes portant les mêmes chiffres de référence étant identiques ou similaires et ayant en tout cas une fonction identique, on se contentera de décrire comment on passe des figures 5 à 7, c'est-à-dire comment on passe de la position branche fermée à la position d'ouverture normale, puis à la position d'ouverture complémentaire.

Entre la position fermée représentée à la figure 5 et la position ouverte représentée à la figure 6, il ne se passe rien d'autre que ce qui a été déjà décrit pour les figures 1 et 2, avec l'effet de came dû à la forme anguleuse du chamon 1, l'organe de rappel 6 tendant à refermer ou ouvrir la branche 5 par flexion en P.

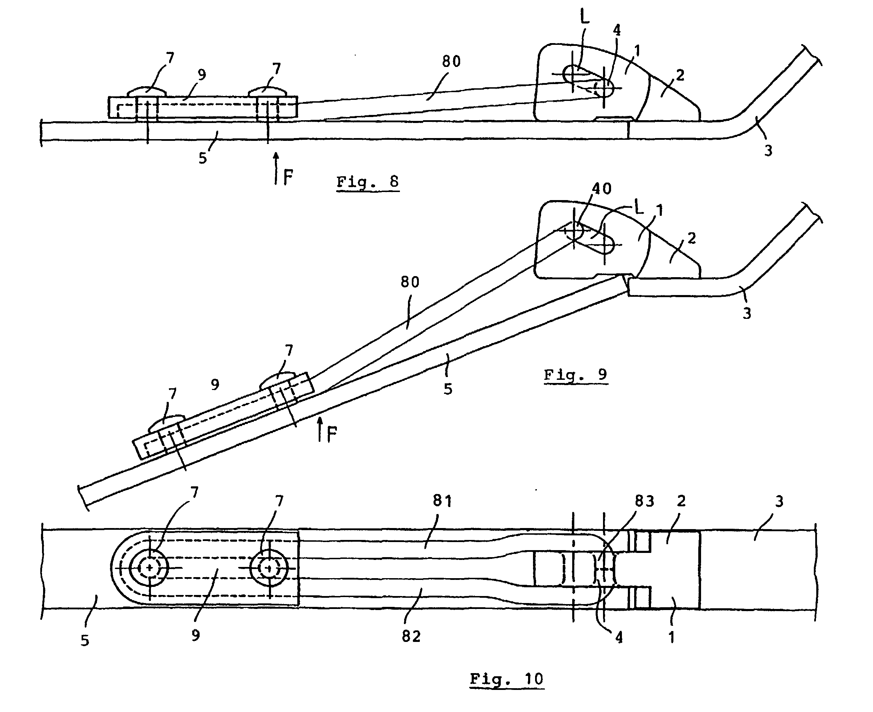

Lorsqu'on tire sur la branche au-delà de sa position normale pour se retrouver dans la figure 7, l'axe 4 glisse dans la lumière 10 faisant rampe depuis la droite vers la gauche, sous l'effet du pivotement autour du point P, ce que sollicite à nouveau l'organe de rappel 6 en flexion au point F.

Quand on relâche la branche, la force de rappel ainsi créée renvoie la branche 5 dans le prolongement du tenon 3 et l'axe 4 glisse vers la droite pour revenir dans sa position initiale.

Les figures 8 à 10 correspondent à la même forme d'exécution, avec axe 4 flottant dans une rampe, que celle des figures 5 à 7, mais l'organe de rappel, indiqué ici par 80, se présente sous forme d'une double tige constituée en réalité d'une tige unique pliée à deux brins 81, 82, dont l'extrémité 83 se ferme et forme l'axe 4 de charnière pour le chamon. A l'autre extrémité, les deux brins sont fixés sur la branche 5 par deux vis 7 au moyen d'un raccord 9 qui l'emprisonnent. Avantageusement, la double tige a une forme de diapason.

On remarquera que l'organe intermédiaire 9 peut permettre de décaler très légèrement le point d'ancrage de l'organe 81 sur la branche 5, ce qui va agir sur la force de flexion au point F, donc sur la force de rappel.

Une telle forme d'exécution à double tige se prête fort bien à la réalisation d'une charnière luxable, c'est-à-dire une charnière dont la branche 5 n'est pas forcément exactement dans le prolongement du tenon 3 et peut s'en écarter par inclinaison d'un angle α ou d'un angle β dans un plan ou dans un autre. Pour plus de détails, on se rapportera à la demande de brevet français de la Demanderesse n° 94.14743, non encore publiée, dont le contenu est incorporé ici par voie de référence.

La charnière élastique selon l'invention, outre sa grande simplicité et donc sa grande fiabilité, a pour avantage qu'en position ouverte normale, il y a une continuité parfaite entre la branche (5) et le tenon (3).

## Revendications

1. Charnière élastique pour monture de lunettes, comprenant un charnon (1) intérieur mâle ou femelle fixé sur l'extrémité d'un tenon (3) de monture, et une branche (5) pivotant autour d'un axe de rotation (4) d'une position fermée à une position ouverte normale sensiblement dans le prolongement du tenon (3) et en butée sur celui-ci la branche (5) étant reliée intérieurement au charnon (1) par l'intermédiaire d'un organe de rappel (6) libre en rotation autour du chamon (1) et travaillant en flexion, **caractérisée en ce que** l'organe de rappel (6) ou le charnon (1) possède une rampe (61, L) à l'intérieur de laquelle l'axe de rotation (4) est flottant et se déplace entre deux positions extrêmes, lorsque la branche (5), est écartée au-delà de sa position d'ouverture normale, prend appui en pivot (P) contre l'extrémité du tenon (3) faisant butée, sollicitant ainsi l'organe de rappel (6) en flexion (F), qui tend à ramener la branche (5) en position ouverte normale.

2. Charnière élastique selon la revendication 1, **caractérisée en ce que** les deux positions extrêmes sont déterminées par la forme en boucle de la rampe (61) conférée à l'extrémité de l'organe de rappel (6) autour de l'axe (4) du charnon (1).

3. Charnière élastique selon la revendication 2, **caractérisée en ce que** l'extrémité de l'organe de rappel (6) a la forme d'une boucle (61,62) ouverte lovée autour de l'axe (4) du chamon (1), la largeur de l'ouverture étant inférieure au diamètre de l'axe du chamon.

4. Charnière élastique selon la revendication 2, **caractérisée en ce que** l'extrémité de l'organe de rappel (6) a la forme d'une boucle fermée (61,63) lovée autour de l'axe (4) du chamon (1).

5. Charnière élastique selon la revendication 1, **caractérisée en ce que** les deux positions extrêmes sont définies par une lumière (L) faisant rampe, ménagée dans le chamon (1).

6. Charnière élastique selon la revendication 5, **caractérisée en ce que** la lumière (L) est inclinée par rapport à l'axe du tenon d'un angle compris entre 0 et 60°.

7. Charnière élastique selon l'une des revendications précédentes, **caractérisée en ce que** le charnon a une forme (S) faisant came sur laquelle la branche (5) prend appui à l'ouverture et à la fermeture, ce qui définit en coopération avec l'organe de rappel (6) deux positions de repos stables, respectivement la position ouverte normale et la position fermée où la branche (5) est rabattue contre la face de la monture.

8. Charnière élastique selon l'une des revendications 1 à 7, **caractérisée en ce que** l'organe de rappel (6) est une lame droite ou arquée.

9. Charnière élastique selon l'une des revendications 1 à 7, **caractérisée en ce que** l'organe de rappel (80) est une tige pliée en deux brins (81,82) dont les extrémités coudées (83) se ferment et se forment comme axe (4) de charnière pour le chamon.

10. Charnière élastique selon l'une des revendications précédentes, **caractérisée en ce que** l'extrémité du tenon (3) fait butée contre la branche (5) par un décrochement entre le tenon (3) et le charnon (1) disposés côte à côte.

## Patentansprüche

1. Elastisches Scharnier für ein Brillengestell mit einem inneren männlichen oder weiblichen Scharnierteil, das an dem Ende einer Nase (3) des Gestells befestigt ist, und mit einem Bügel (5), der um eine Schwenkachse (4) zwischen einer geschlossenen Stellung und einer geöffneten Normalstellung in Verlängerung der Nase (3) und mit dieser in Anschlag kommend schwenkbar ist, wobei der Bügel (5) mittels eines frei um das Scharnierteil (1) drehbaren und unter Federwirkung arbeitenden Rückzugteils (6) innenseitig mit dem Scharnier (1) verbunden ist, **dadurch gekennzeichnet, dass** das Rückzugteil (6) oder das Scharnierteil (1) ein Führungsteil (61, L) aufweisen, innerhalb dem die Schwenkachse (4) beweglich ist und sich zwischen zwei Endstellungen verschiebt, wenn der Bügel (5) aus seiner geöffneten Normalstellung gebracht wird, unter Schwenken (P) an dem Ende der als Anschlag dienenden Nase (3) anliegt und dadurch das Rückzugteil (6) unter Federwirkung (F) beansprucht, welches daraufhinwirkt, dass der Bügel (5) in die geöffnete Normalstellung rückgeführt wird.

2. Elastisches Scharnier nach Anspruch 1, **dadurch gekennzeichnet, dass** die beiden Endstellungen durch die umschließende Gestalt des am Ende des Rückzugteils (6) ausgebildeten und die Achse (4) des Scharnierteils (1)umschließenden Führungsteils (61) bestimmt sind.

3. Elastisches Scharnier nach Anspruch 2, **dadurch gekennzeichnet, dass** das Ende des Rückzugteils (6) die Gestalt einer offenen, um die Achse (4) des Scharnierteils (1) gelegten Schlinge (61, 62) hat, wobei die Größe der Öffnung kleiner als der Durchmesser der Achse des Scharnierteils ist.

4. Elastisches Scharnier nach Anspruch 2, **dadurch gekennzeichnet, dass** das Ende des Rückzugteils (6) die Gestalt einer geschlossenen, um die Achse (4) des Scharnierteils (1) gelegten Schlinge (61, 63) hat.

5. Elastisches Scharnier nach Anspruch 1, **dadurch gekennzeichnet, dass** die beiden Endstellungen durch ein als Führungsteil wirkendes Langloch (L) bestimmt sind.

6. Elastisches Scharnier nach Anspruch 5, **dadurch gekennzeichnet, dass** das Langloch (L) relativ zu der Achse der Nase um einen Winkel zwischen 0 und 60° geneigt ist.

7. Elastisches Scharnier nach einem der vorangehenden Ansprüche, **dadurch gekennzeichnet, dass** das Scharnierteils eine als Nocke dienende Gestalt (S) aufweist, an der der Bügel (5) beim Öffnen und Schließen anliegt, was im Zusammenwirken mit dem Rückzugmittel (6) zu zwei stabilen Ruhestellungen führt, nämlich der geöffneten Normalstellung und der geschlossenen Stellung, in der der Bügel (5) gegen die Flachseite des Gestells umgelegt ist.

8. Elastisches Scharnier nach einem der Ansprüche 1 bis 7, **dadurch gekennzeichnet, dass** das Rückzugmittel (6) eine gerade oder gewölbt ausgebildete Lamelle ist.

9. Elastisches Scharnier nach einem der Ansprüche 1 bis 7, **dadurch gekennzeichnet, dass** das Rückzugmittel (80) ein zu zwei Armen (81, 82) umgelegter Stab ist, dessen gebogene Enden (83) geschlossen sind und die Scharnierachse (4) für das Scharnierteil bilden.

10. Elastisches Scharnier nach einem der vorangehenden Ansprüche, **dadurch gekennzeichnet, dass** das Ende der Nase (3) über einen Versatz zwischen der Nase (3) und dem Scharnierteil (1), die nebeneinander angeordnet sind, an dem Bügel (5) anliegt.

## Claims

1. Resilient hinge for spectacle frames, comprising an inner male or female knuckle (1) fixed to the end of a frame lug (3), and an arm (5) rotating about a swivel pin (4) from a closed position to a normal open position substantially in the extension of the lug (3) and abutting against this, the inner side of the arm (5) being connected to the knuckle (1) by means of a return device (6) which can rotate freely about the knuckle (1) and operating by bending, **characterized in that** the return device (6) or the knuckle (1) forms a ramp (61,L) in the inner thereof the swivel pin (4) is floating and moving between two extreme positions when the arm (5) is moved beyond its normal open position, resting pivotingly (P) against the end of the lug (3) acting as a stop, thus subjecting the return device (6) to a bending stress (F), which tends to bring the arm into the normal open position.

2. Resilient hinge according to claim 1, **characterized in that** the two extreme positions are determined by the looped shape of the ramp (61) given to the end of the return device (6) around the swivel pin (4) of the knuckle (1).

3. Resilient hinge according to claim 2, **characterized in that** the end of the return device (6) has the form of an open loop (61,62) wound around the swivel pin (4) of the knuckle (1), the width of the opening being less than the diameter of the swivel pin of the knuckle.

4. Resilient hinge according to claim 2, **characterized in that** the end of the return device (6) has the form of a closed loop (61,63) wound around the swivel pin (4) of the knuckle (1).

5. Resilient hinge according to claim 1, **characterized in that** the two extreme positions are defined by a slot (L) making a ramp, provided in the knuckle (1).

6. Resilient hinge according to claim 5, **characterized in that** the slot (L) is inclined in relation to the axis of the lug at an angle of between 0° and 60°.

7. Resilient hinge according to one of the preceding claims, **characterized in that** the knuckle has a form (S) making a cam on which the arm (5) rests when opened and closed, which defines, together with the return device (6), two stable rest positions, the normal open position and the closed position respectively, where the arm (5) is folded back against the front part of the frame.

8. Resilient hinge according to one of claims 1 to 7, **characterized in that** the return device (6) is a straight or arc-shaped blade.

9. Resilient hinge according to one of claims 1 to 7, **characterized in that** the return device (80) is a rod folded into two sections (81,82), the elbowed ends (83) of which are closed and are formed as a swivel pin (4) of the hinge for the knuckle.

10. Resilient hinge according to any one of the preceding claims, **characterized in that** the end of the frame lug (3) abutts against the arm (5) by means of a recess between the frame lug (3) and the knuckle (1) placed side by side.
